# EUROPÄISCHE PATENTSCHRIFT

(11) **EP 3 211 243 B1**
(45) Veröffentlichungstag und Bekanntmachung des Hinweises auf die Patenterteilung: **05.08.2020**
(21) Anmeldenummer: 16161650.3
(22) Anmeldetag: 22.03.2016
(51) Int. Cl.: F04D 29/30, F04D 29/38, F04D 29/28

(54) **PROFILSCHAUFEL, VENTILATORRAD UND VERFAHREN ZUR HERSTELLUNG EINER PROFILSCHAUFEL**
PROFILE BLADE, VENTILATOR WHEEL AND METHOD FOR PRODUCING A PROFILE BLADE
AUBE PROFILEE, ROUE DE VENTILATEUR ET PROCEDE DE FABRICATION D'UNE AUBE PROFILEE

(30) Priorität: 24.02.2016 DE 102016202894
(43) Veröffentlichungstag der Anmeldung: 30.08.2017
(73) Patentinhaber: punker GmbH, 24340 Eckernförde (DE)
(72) Erfinder: WOLF, Matthias, 24114 Kiel (DE); KLINGER, Ralf, 24340 Eckernförde (DE); MÖLLERS, Knud, 24782 Büdelsdorf (DE); HORNHARDT, Christian, 24229 Dänischenhagen (DE)
(74) Vertreter: Patentanwälte Magenbauer & Kollegen Partnerschaft mbB

(56) Entgegenhaltungen:
- EP-A2- 2 940 313
- DE-A1- 19 751 729
- DE-B- 1 137 710
- JP-A- 2011 032 991
- US-A- 3 144 204

## Beschreibung

Die Erfindung betrifft eine Profilschaufel für ein Ventilatorrad, mit einem aus wenigstens einem gebogenen Blechstreifen hergestellten Profilkörper, wobei benachbarte Endbereiche des wenigstens einen Blechstreifens stoffschlüssig und/oder formschlüssig miteinander verbunden sind. Ferner betrifft die Erfindung ein Ventilatorrad und ein Verfahren zur Herstellung einer Profilschaufel.

Gemäß einem der Anmelderin bekannten, druckschriftlich nicht niedergelegten Stand der Technik werden Profilschaufeln für Ventilatorräder in kostengünstiger Weise dadurch hergestellt, dass ein vorzugsweise rechteckig geformter Blechstreifen zumindest in einem ungefähr in der Mitte des Blechstreifens angesiedelten Biegebereich quer zu einer längsten Kante umgebogenen wird. Bei diesem Biegevorgang werden einander entgegengesetzte erste und zweite Endbereichskanten des Blechstreifens aneinander angenähert. Für diesen Biegevorgang kann beispielsweise eine Biegevorrichtung benutzt werden, mit deren Hilfe im Biegebereich eine zylindermantelabschnittsförmige Profilnase mit einem im Wesentlichen halbzylindrischen Querschnitt geschaffen wird. Im Zuge des Biegevorgangs entsteht zeitweilig eine U-förmige Profilierung, die durch Weiterführung des Biegevorgangs in eine tropfenförmige Profilierung überführt wird. Diese tropfenförmige Profilierung stellt den Endzustand des Biegevorgangs dar. In einem nachfolgenden Bearbeitungsschritt kann dann eine stoffschlüssige und/oder formschlüssige Verbindung der benachbart angeordneten Endbereichskanten des Blechstreifens vorgesehen werden, um eine stabile Profilschaufel herzustellen. Beispielhaft ist vorgesehen, die benachbart angeordneten Endbereichskanten des Blechstreifens miteinander zu verschweißen und/oder zu verkleben und/oder zu clinchen (Durchsetzfügen).

Aus der _JP_2011-032991 A ist ein Gebläserad bekannt, das mehrere Schaufeln umfasst, die zwischen einer Primärplatte und einer Seitenplatte angeordnet sind und deren Blattdicke längs einer Erstreckungsachse variiert. Hierzu ist jede der Schaufeln aus einer dünnen Metallplatte hergestellt, die durch Biegen umgeformt wird, wobei eine Vorderkante der Schaufel durch einen minimalen Biegeradius bestimmt ist und wobei an einer Hinterkante der Schaufel ein erster Endbereich der Metallplatte beabstandet zu einem zweiten Endbereich der Metallplatte angeordnet ist und an einer Oberfläche des zweiten Endbereichs der Metallplatte mit einer Schweißnaht festgelegt ist.

Aus der EP 2 940 313 A2 ist eine Hohlprofilschaufel für ein Lüfterrad bekannt, die aus einem flächigen Halbzeug hergestellt wird und eine Vorderkante und eine Hinterkante sowie eine Druckseite und eine Saugseite aufweist. Im Inneren der Hohlprofilschaufel ist ein hohler Bereich ausgebildet, wobei das die eine Seite der Hohlprofilschaufel bildende Teil des flächigen Halbzeugs der Hohlprofilschaufel über das die andere Seite der Hohlprofilschaufel bildende Teil des flächigen Halbzeugs hinausragt.

Die Aufgabe der Erfindung besteht darin, eine Profilschaufel, ein Ventilatorrad mit derartigen Profilschaufeln sowie ein Verfahren zum Herstellen einer Profilschaufel bereitzustellen, mit denen unter Beibehaltung der kostengünstigen Herstellungsweise eine verbesserte Steifigkeit für die Profilschaufeln erzielt werden kann.

Diese Aufgabe wird für eine Profilschaufel der eingangs genannten Art mit den Merkmalen des Anspruchs 1 gelöst. Hierbei ist vorgesehen, dass ein zweiter Endbereich beabstandet zu einer zweiten Endbereichskante mit wenigstens einer Einprägung zur Ausbildung einer Anlagefläche für eine zumindest abschnittsweise Anlage eines ersten Endbereichs versehen ist.

Dabei kommt der wenigstens einen Einprägung eine Doppelfunktion zu, da sie einerseits eine Kontaktfläche für den stoffschlüssig zu verbindenden, ersten Endbereich mit der Oberseite des zweiten Endbereichs vergrößert und da sie andererseits zu einer Verstärkung der Steifigkeit des zweiten Endbereichs führt, ohne dass dadurch wesentliche aerodynamische Nachteile in Kauf genommen werden müssen. Vorzugsweise ist wenigstens eine Einprägung in einem der Endbereiche derart ausgebildet, dass ihre dem jeweils anderen Endbereich zugewandte Kontaktfläche zumindest abschnittsweise parallel zu einem der Endbereichskante benachbarten oder von der Endbereichskante ausgehenden Abschnitt des jeweiligen Endbereichs ausgerichtet ist. Beispielhaft ist die Einprägung als Anordnung von, vorzugsweise jeweils parallel zur Endkante ausgerichteten, insbesondere zwei gegensinnigen, Abkantungen des jeweiligen Endbereichs ausgebildet. Beispielhaft kann die wenigstens eine Einprägung auch eine oder mehrere Durchbrechungen des Blechstreifens beinhalten, wodurch beispielsweise von der Oberfläche des zweiten Endbereichs abstehende Zungen gebildet werden, an denen die erste Endbereichskante angelegt werden kann oder hinter die die erste Endbereichskante geschoben werden kann. Exemplarisch sind an beiden Endbereichen wechselseitig angeordnete Einprägungen vorgesehen.

Vorteilhafte Weiterbildungen der Erfindung sind Gegenstand der Unteransprüche.

Vorzugsweise ist vorgesehen, dass eine erste Endbereichskante eines ersten Endbereichs beabstandet zu einer zweiten Endbereichskante eines zweiten Endbereichs angeordnet ist und dass die erste Endbereichskante an einer dem ersten Endbereich zugewandten Oberseite des zweiten Endbereichs festgelegt ist.

Mit dieser Maßnahme wird erreicht, dass für die stoffschlüssige Verbindung der beiden Endbereiche eine größere Verbindungsfläche zu Verfügung steht, als dies der Fall ist, wenn gemäß dem Stand der Technik die beiden Endbereichskanten aneinander angelegt und miteinander verbunden werden. Ferner ist in Abhängigkeit vom vorgesehenen Verbindungsverfahren, insbesondere Schweißverfahren oder Klebeverfahren, eine Durchführung des Verbindungsvorgangs mit verbesserter Prozesssicherheit möglich, da die Oberseite des zweiten Endbereichs eine Zuführung eines Schweiß-Zusatzwerkstoffs und/oder eines Klebstoffs unterstützt und/oder eine Schweißdüse eines Schweißgeräts auf der Oberseite des zweiten Endbereichs während der Durchführung des Schweißvorgangs aufgelegt werden kann. Ferner wird durch diese Maßnahme ein Wärmeverzug reduziert, wie er bei einer stoffschlüssigen Verbindung der Endbereichskanten durch Schweißen auftreten kann. Der Abstand der ersten Endbereichskante zur zweiten Endbereichskante kann über die gesamte Kantenlänge konstant gewählt sein oder variieren, dies ist insbesondere von der Profilgeometrie der Profilschaufel abhängig. Bei einer Grundform der Profilschaufel ist eine konstante Profilierung des Profilkörpers längs einer Profilachse vorgesehen, dabei weist der Profilkörper in zueinander parallelen Querschnittsebenen, die jeweils senkrecht zur Profilachse ausgerichtet sind, konstanten Querschnitt auf. Bei einer Variation dieser Grundform kann vorgesehen sein, dass der Profilkörper in zueinander parallelen Querschnittsebenen, die jeweils senkrecht zur Profilachse ausgerichtet sind, veränderliche Querschnitte aufweist. Eine solche Profilschaufel kann beispielsweise Oberflächen mit mehrdimensionalen Krümmungen aufweisen, wie sie beispielsweise für Hochleistungs-Ventilatorräder eingesetzt werden. Vorzugsweise ist vorgesehen, die die erste Endbereichskante in unmittelbarer Nachbarschaft zu einer Biegekante der im zweiten Endbereich eingebrachten Einprägung angeordnet ist. Zweckmäßig ist es, wenn der Profilkörper ein den ersten Endbereich umfassendes erstes, insbesondere plattenförmig ausgebildetes, Profilteil aufweist, das mit einer mantelförmig ausgebildeten, stark gekrümmten Profilnase verbunden ist, die mit einem zweiten, insbesondere plattenförmig ausgebildeten, Profilteil verbunden ist, das am zweiten Endbereich endet. Dabei sind die beiden Profilteile und die Profilnase vorzugsweise einstückig miteinander ausgeführt und stellen lediglich unterschiedlich gekrümmte Bereiche des wenigstens einen geformten Blechstreifens dar. Beispielhaft kann die Profilnase in der Art eines Ausschnitts aus einem Zylindermantel geformt sein und weist dabei bezogen auf eine Profilachse einen zumindest im Wesentlichen konstanten Krümmungsradius auf. Andere Profilierungen der Profilnase, die beispielsweise einer Flügelvorderkante eines Tragflächenprofils für eine Flugzeugtragfläche entsprechen, können ebenfalls vorgesehen sein.

In weiterer Ausgestaltung der Erfindung ist vorgesehen, dass die Profilnase eine konvex gekrümmte Außenoberfläche aufweist und/oder dass das erste Profilteil eine konvex gekrümmte Außenoberfläche aufweist und/oder dass das zweite Profilteil eine konkav gekrümmte Außenoberfläche aufweist.

Vorteilhaft ist es, wenn die Einprägung als Sicke ausgebildet ist und/oder beabstandet, insbesondere parallel, zur zweiten Endbereichskante verläuft. Unter einer Sicke soll zunächst eine geschlossene Einprägung verstanden werden, die längs einer Profilachse in zueinander parallelen Querschnittsebenen, die quer zur Profilachse ausgerichtet sind, einen konstanten Querschnitt aufweist und bei der keine Durchbrechungen des Blechstreifens vorgesehen sind. Varianten für eine Sicke können vorsehen, dass die Einprägung längs der Profilachse eine Querschnittsveränderung aufweist, beispielsweise dass die Sicke ausgehend von einer tiefen Einprägung an einem Ende der Endbereichskante bis zum anderen Ende der Endbereichskante gänzlich verschwindet. Durch die Gestaltung der Einprägung als Sicke kann eine vorteilhafte Stabilisierung des zweiten Endbereichs verwirklicht werden. Ferner treten bei der Verwendung einer Sicke als Einprägung in zweiten Endbereich keine unerwünschten Querströmungen bei Verwendung der Profilschaufel in einem Ventilatorrad auf, die zu aerodynamischen Verlusten und möglicherweise zu unerwünschten Geräuschen führen können.

Bei einer vorteilhaften Weiterbildung der Erfindung ist vorgesehen, dass die Einprägung an der Oberseite des zweiten Endbereichs erhaben, insbesondere mit einer L-förmigen Profilierung, ausgebildet ist. Vorzugsweise ist vorgesehen, dass ein längerer Schenkel der L-förmigen Profilierung der zweiten Endbereichskante des zweiten Endbereichs zugewandt ist und mit der Oberfläche des zweiten Endbereichs einen spitzen Winkel in einem Winkelbereich größer 0 Grad bis 20 Grad einnimmt. Ein kürzerer Schenkel der L-förmigen Profilierung nimmt beispielhaft einen Winkel von ca. 90 Grad gegenüber dem längeren Schenkel ein und weist in Richtung der Profilnase. Bei einer derartigen Ausgestaltung der Einprägung liegt der erste Endbereich flächig an der, insbesondere rechteckigen, Oberseite des längeren Schenkels der L-förmigen Profilierung an und ermöglicht damit die vorteilhafte flächige und stabile Verbindung der beiden Endbereiche des Blechstreifens.

Zweckmäßig ist es, wenn die Einprägung an der Oberseite des zweiten Endbereichs vertieft, insbesondere mit einer L-förmigen Profilierung, ausgebildet ist. Bei dieser Variante einer Einprägung weist der kürzere Schenkel der L-förmigen Profilierung in Richtung der zweiten Endbereichskante, während der längere Schenkel der L-förmigen Profilierung in Richtung der Profilnase weist. Die Endbereichskante des ersten Endbereichs liegt bei dieser Ausführungsform an der, insbesondere rechteckigen, Oberseite des längeren Schenkels der L-förmigen Profilierung an und ist in diesem Bereich flächig und stabil mit dem zweiten Endbereich verbunden.

Bevorzugt ist vorgesehen, dass der Profilkörper stirnseitig offen ausgebildet ist und/oder aus genau einem einstückigen, umgebogenen Blechstreifen gebildet ist. Hierdurch wird eine kostengünstige Gestaltung der Profilschaufel ermöglicht, die in einem nachfolgenden Bearbeitungsschritt ohnehin mit einer Ronde und einem Ring eines Ventilatorrads stirnseitig verbunden wird, wodurch die Stirnseiten des Profilkörpers zumindest nahezu vollständig verschlossen werden. Bei einer einstückigen Gestaltung der Profilschaufel aus genau einem Blechstreifen kann ebenfalls eine kostengünstige Herstellung gewährleistet werden.

In weiterer Ausgestaltung der Erfindung ist vorgesehen, dass die erste Endbereichskante mit der dem ersten Endbereich zugewandten Oberseite des zweiten Endbereichs verschweißt und/oder verklebt ist.

Die Aufgabe der Erfindung wird für ein Ventilatorrad zur Förderung eines gasförmigen Fluids mit den Merkmalen des Anspruchs 10 gelöst. Dabei umfasst das Ventilatorrad eine scheibenförmige Ronde, die koaxial zu einer Rotationsachse ausgebildet ist und die ihrerseits eine Nabenanordnung umfasst, ferner sind ein koaxial zur Rotationsachse und beabstandet zur Ronde angeordneter Ring und mehrere in vorgebbarer Winkelteilung in einem ringförmigen Raumvolumen um die Rotationsachse angeordnete Profilschaufeln nach einem der Ansprüche 1 bis 9 vorgesehen, die mit axialen, einander entgegengesetzten Stirnflächen an der Ronde und am Ring festgelegt sind. Ein derartiges Ventilatorrad wird beispielsweise mit seiner Nabenanordnung an einem elektrischen Antriebsmotor festgelegt und in einem mit Eintrittsöffnungen und Austrittsöffnungen versehenen Gebläsekasten aufgenommen, um bei Rotation um die Rotationsachse ein Fluidstrom, insbesondere einen Luftstrom, hervorrufen zu können. Typische Anwendungen für derartige Ventilatorräder sind Heißluft-Backöfen, Dampfgarer, Heizungsbrenner und Klimaanlagen.

Bei einer vorteilhaften Weiterbildung des Ventilatorrads ist vorgesehen, dass die Profilschaufeln jeweils eine radial innenliegend im ringförmigen Raumvolumen angeordnete Profilnase und radial außenliegend im ringförmigen Raumvolumen angeordnete erste Endbereiche und zweite Endbereiche aufweisen.

Die Aufgabe der Erfindung wird durch ein Verfahren zur Herstellung einer Profilschaufel, die insbesondere nach einem der Ansprüche 1 bis 9 ausgeführt ist, wie es im Anspruch **12** angegeben ist, gelöst. Hierbei umfasst das Verfahren die Schritte: Bereitstellen eines Blechstreifens an eine Prägeeinrichtung, Durchführen eines Prägevorgangs zur Einbringung einer Einprägung in einen zweiten Endbereich des Blechstreifens, insbesondere beabstandet zu einer zweiten Endbereichskante, Bereitstellen des geprägten Blechstreifens an eine Umformeinrichtung und Deformation des Blechstreifens zur Ausbildung einer Profilnase, eines ersten Profilteils und eines zweiten Profilteils, Anlegen einer ersten Endbereichskante eines ersten Endbereichs an eine dem ersten Endbereich zugewandte Oberseite des zweiten Endbereichs und stoffschlüssiges Verbinden der ersten Endbereichskante mit der Oberseite des zweiten Endbereichs.

Bei einer Weiterbildung des Verfahrens ist vorgesehen, dass mit der Durchführung des Prägevorgangs die Deformation des Blechstreifens und/oder ein Trennvorgang für den Blechstreifen aus einer Blechtafel vorgenommen werden.

Bei einer Weiterbildung des Verfahrens ist vorgesehen, dass die erste Endbereichskante mit der Oberseite des zweiten Endbereichs verschweißt wird und dass die dadurch gebildete Profilschaufel für eine stirnseitige Verschweißung mit einer scheibenförmigen Ronde und mit einem koaxial und beabstandet zur Ronde angeordneten Ring jeweils längs einer umlaufenden Profilaußenkante ausgebildet ist.

Vorteilhafte Ausführungsformen der Erfindung sind in der Zeichnung dargestellt. Hierbei zeigt:
- Figur 1: eine perspektivische Darstellung einer Profilschaufel gemäß dem Stand der Technik,
- Figur 2: eine perspektivische Darstellung einer ersten Ausführungsform einer Profilschaufel, bei der eine erste Endbereichskante eines ersten Endbereichs flächig an einer vertieften Einprägung in einer Oberseite eines zweiten Endbereichs anliegt,
- Figur 3: eine perspektivische Darstellung einer zweiten Ausführungsform einer Profilschaufel, bei der eine erste Endbereichskante eines ersten Endbereichs flächig an einer erhabenen Einprägung in einer Oberseite eines zweiten Endbereichs anliegt,
- Figur 3a: eine perspektivische Detaildarstellung einer Variante der in Figur 3 dargestellten zweiten Ausführungsform einer Profilschaufel, bei der der zweite Endbereich gegenüber der Ausführungsform der Figur 3 gekürzt ist, so dass die beiden Endbereichskanten unmittelbar benachbart zueinander angeordnet sind,
- Figur 4: eine perspektivische, teilweise ausgebrochene dargestellte, Darstellung einer vierten Ausführungsform einer Profilschaufel, bei der eine erste Endbereichskante eines ersten Endbereichs flächig an einer Mehrzahl von Einprägungen in einer Oberseite eines zweiten Endbereichs anliegt,
- Figur 5: eine perspektivische Darstellung eines Ventilatorrads, das mit Profilschaufeln gemäß der in Figur 2 dargestellten Ausführungsform ausgerüstet ist,
- Figur 6: eine perspektivische, teilweise ausgebrochene dargestellte, Darstellung einer fünften Ausführungsform einer Profilschaufel, bei der eine erste Endbereichskante eines ersten Endbereichs abschnittsweise an einer Einprägung, die in einer Oberseite eines zweiten Endbereichs ausgebildet ist, anliegt,
- Figur 7: eine perspektivische, teilweise ausgebrochene dargestellte, Darstellung einer sechsten Ausführungsform einer Profilschaufel, die als Variante der fünften Ausführungsform der Profilschaufel ausgebildet ist und bei der der Einprägung in der Oberseite des zweiten Endbereichs randseitige Versteifungsprägungen zugeordnet sind, und
- Figur 8: eine perspektivische Darstellung einer siebten Ausführungsform einer Profilschaufel, die als Variante der sechsten Ausführungsform der Profilschaufel ausgebildet ist und bei eine Einprägung in eine Unterseite des ersten Endbereichs mit randseitigen Versteifungsprägungen versehen ist.

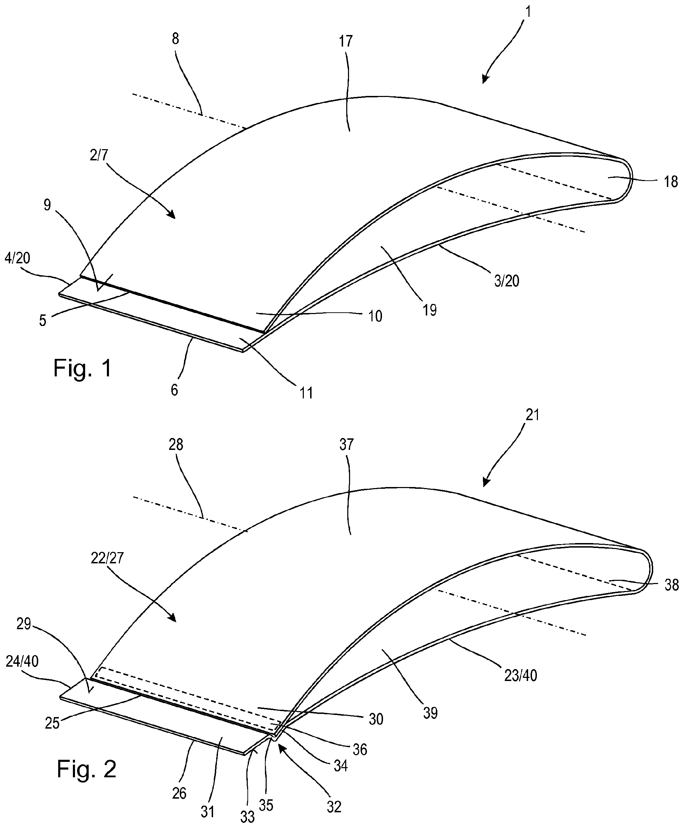

Bei den nachstehend näher beschriebenen Ausführungsformen von Profilschaufeln 1, 21, 41, 41a, 61, 101, 121, 141 werden für funktionsgleiche Strukturen die gleichen, jeweils um 20 erhöhten Bezugszeichen verwendet. Eine Beschreibung der jeweiligen Strukturen erfolgt jeweils nur einmal. Zunächst erfolgt eine Erläuterung einer aus dem Stand der Technik bekannten Profilschaufel 1, anhand derer die Grundbestandteile der in den Figuren 2 bis 8 dargestellten, erfindungsgemäßen Profilschaufeln 21, 41, 41a, 61, 101, 121, 141 aufgezeigt werden.

Eine in der Figur 1 dargestellte Profilschaufel 1 gemäß dem Stand der Technik ist rein exemplarisch aus einem rechteckigen Blechstreifen 2 hergestellt. Der Blechstreifen 2 umfasst zwei längste Kanten 3, 4 sowie zwei Endbereichskanten 5, 6. Dabei sind die längsten Kanten 3, 4 jeweils rechtwinklig zu den Endbereichskanten 5, 6 ausgerichtet. Der Blechstreifen 2 kann beispielsweise als Abschnitt eines nicht dargestellten Bandmaterials oder als Ausschnitt aus einer nicht dargestellten Blechtafel hergestellt sein und wurde etwas abseits einer Mitte der beiden längsten Kanten 3, 4 umgebogen. Durch diesen Umformvorgang wurde ein Profilkörper 7 gebildet, der rein exemplarisch längs einer Profilachse 8 eine konstante Profilierung aufweist. Durch die Durchführung des Biegevorgangs abseits der Mitte der beiden längsten Kanten 3, 4 kommt die Endbereichskante 5 beabstandet zur Endbereichskante 6 zu liegen, wobei die beiden Endbereichskanten 5, 6 rein exemplarisch parallel zueinander ausgerichtet sind. Hierdurch bildet die Oberseite 9 eines von der zweiten Endbereichskante 6 ausgehenden zweiten Endbereichs 11 eine Auflagefläche für die Endbereichskante 5 eines von dieser Endbereichskante 5 ausgehenden ersten Endbereichs 10. Durch die flächige Auflage der ersten Endbereichskante 5 auf der Oberseite 9 wird eine stoffschlüssige Verbindung der Endbereichskante 5 mit der Oberseite 9 erleichtert, unabhängig davon, ob eine stoffschlüssige Verbindung der Endbereichskante 5 mit der Oberseite 9 durch Kleben oder durch Schweißen erzielt werden soll. Der Profilkörper 7 der in der Figur 1 dargestellten Profilschaufel 1 umfasst rein exemplarisch ein den ersten Endbereich 10 umfassendes erstes, plattenförmig mit einer konvexen Außenoberfläche ausgebildetes Profilteil 17, das einstückig mit einer mantelförmig ausgebildeten, stark gekrümmten Profilnase 18 verbunden ist, die mit einem zweiten, plattenförmig mit einer konkaven Außenoberfläche ausgebildeten Profilteil 19 verbunden ist, das am zweiten Endbereich 11 endet. Bei der in Figur 2 dargestellten ersten Ausführungsform einer erfindungsgemäßen Profilschaufel 21 ist eine erste Endbereichskante 25 eines ersten Endbereichs 30 in einer Einprägung 32 in einer Oberseite 29 eines zweiten Endbereichs 31 aufgenommen. Rein exemplarisch ist die Einprägung 32 als Vertiefung in die Oberseite 29 des zweiten Endbereichs 31 eingebracht, wodurch sie erhaben von der Unterseite 33 des zweiten Endbereichs 31 abragt. Beispielhaft weist die Einprägung 32 längs der Profilachse 28 eine L-förmige Profilierung auf, wobei ein längerer Schenkel 34 der Einprägung 32 der zweiten Endbereichskante 26 abgewandt ist, während ein kürzerer Schenkel 35 der Einprägung 32 der zweiten Endbereichskante 26 zugewandt ist. Der erste Endbereich 30 kann somit flächig auf einer gestrichelt in der Figur 1 dargestellten, rein exemplarisch rechteckig ausgebildeten Oberfläche 36 der Einprägung 32 aufgelegt werden und stoffschlüssig, vorzugsweise durch Kleben oder Schweißen, mit dieser Oberfläche 36 verbunden werden.

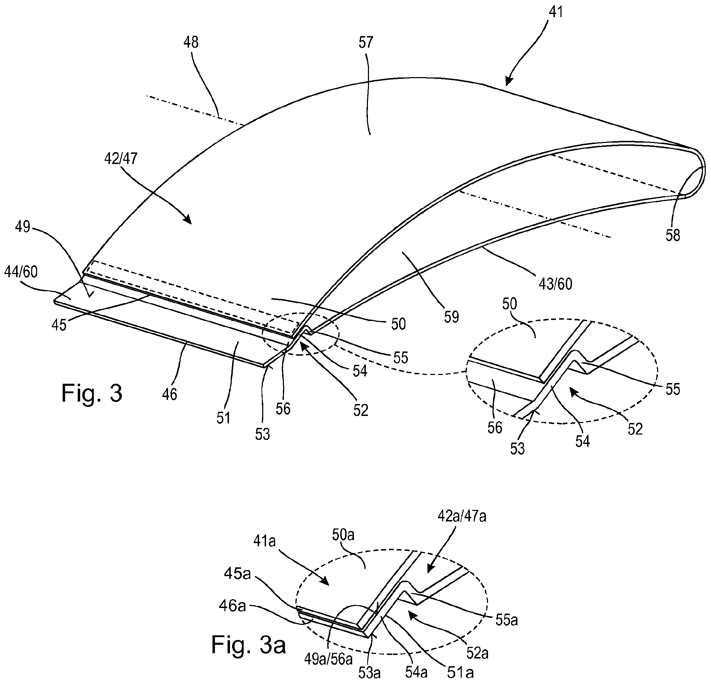

Bei der in Figur 3 dargestellten zweiten Ausführungsform einer erfindungsgemäßen Profilschaufel 41 ist die Einprägung 52 derart in den zweiten Endbereich 51 eingebracht, dass sie erhaben von der Oberseite 49 abragt. Beispielhaft weist die Einprägung 52 längs der Profilachse 48 eine L-förmige Profilierung auf, wobei ein längerer Schenkel 54 der Einprägung 52 der zweiten Endbereichskante 46 abgewandt ist, während ein kürzerer Schenkel 55 der Einprägung 52 der zweiten Endbereichskante 46 zugewandt ist. Der erste Endbereich 50 kann somit flächig auf einer gestrichelt in der Figur 2 dargestellten, rein exemplarisch rechteckig ausgebildeten Oberfläche 56 der Einprägung 52 aufgelegt werden und stoffschlüssig, vorzugsweise durch Kleben oder Schweißen, mit dieser Oberfläche 56 verbunden werden.

Die in Figur 3a dargestellte Variante der in Figur 3 dargestellten zweiten Ausführungsform einer erfindungsgemäßen Profilschaufel 41 ist eine vierte Ausführungsform einer Profilschaufel 41a. Bei der Profilschaufel 41a, die im Übrigen identisch zur Profilschaufel 41 ausgeführt sein kann, ist die Einprägung 52a übereinstimmend mit der Profilschaufel 41 gemäß der Figur 3 derart in den zweiten Endbereich 51a eingebracht, dass sie erhaben von der Oberseite 49a abragt. Beispielhaft weist die Einprägung 52a längs der Profilachse 48a eine L-förmige Profilierung auf, wobei ein längerer Schenkel 54a der Einprägung 52a der zweiten Endbereichskante 46a abgewandt ist, während ein kürzerer Schenkel 55a der Einprägung 52a der zweiten Endbereichskante 46a zugewandt ist. Der erste Endbereich 50a kann somit flächig auf eine rein exemplarisch rechteckig ausgebildete Oberfläche 56a der Einprägung 52a aufgelegt werden und stoffschlüssig, vorzugsweise durch Kleben oder Schweißen, mit dieser Oberfläche 56a verbunden werden. Abweichend von der Profilschaufel 41 gemäß der Figur 3 ist bei der Profilschaufel 41a der zweite Endbereich 51a gekürzt ausgeführt, so dass die beiden Endbereichskanten 45a, 46a unmittelbar benachbart zueinander angeordnet sind. Aufgrund der Einprägung 52a weisen die stoffschlüssig miteinander verbundenen Endbereiche 50a, 51a eine hohe Steifigkeit auf, zudem wird durch die flächige Auflage des ersten Endbereichs 50a auf der Oberfläche 56a der Einprägung 52a eine großflächige, streifenförmige Verbindungszone geschaffen, die ebenfalls zur Stabilisierung der Endbereiche 50a, 51a beiträgt. Dabei kann die Oberfläche 56a wahlweise eben ausgebildet sein, wie dies in der Darstellung der Figur 3a der Fall ist, oder längs der Profilachse eine gekrümmte Profilierung aufweisen.

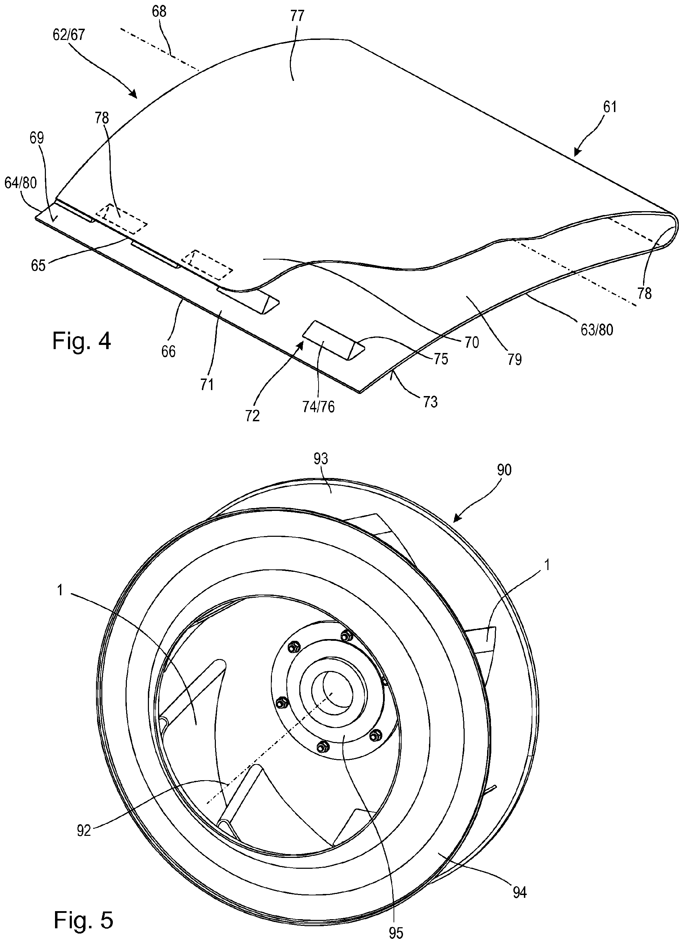

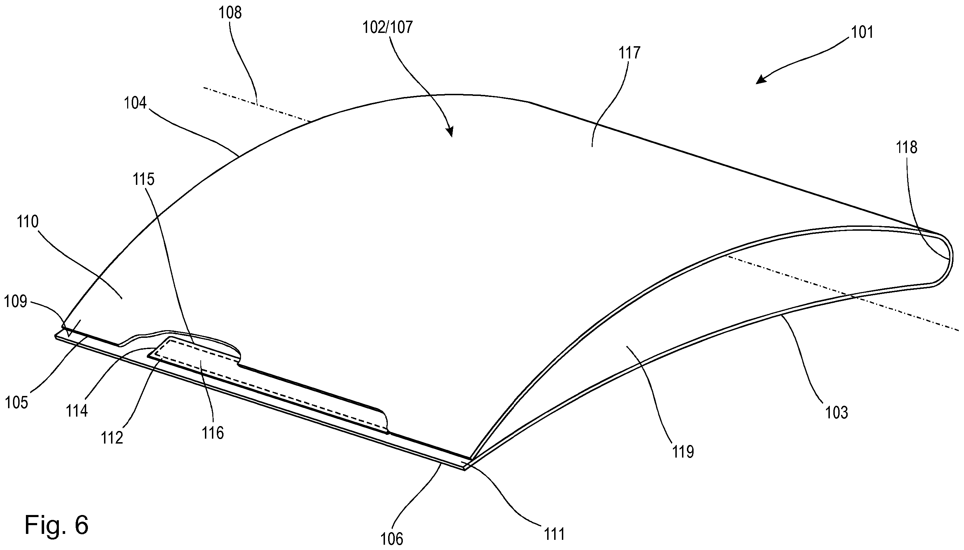

In gleicher Weise können auch die in den Figuren 2 und 4 dargestellten Ausführungsformen von Profilschaufeln 22, 62 mit einem gekürzten zweiten Endbereich ausgebildet sein, während bei den Ausführungsformen gemäß den Figuren 6, 7 und 8 bereits ein solcher gekürzter zweiter Endbereich vorgesehen ist.

Bei der in Figur 4 dargestellten vierten Ausführungsform einer erfindungsgemäßen Profilschaufel 61 sind mehrere Einprägungen 72 derart in den zweiten Endbereich 71 eingebracht, dass sie erhaben von der Oberseite 69 abragen. Beispielhaft weisen die Einprägungen 72 längs der Profilachse 68 jeweils eine L-förmige Profilierung auf, wobei ein längerer Schenkel 74 der Einprägungen 72 der zweiten Endbereichskante 66 abgewandt ist, während ein kürzerer Schenkel 75 der Einprägungen 72 der zweiten Endbereichskante 66 zugewandt ist. Der erste Endbereich 70 kann somit flächig auf gestrichelt in der Figur 4 dargestellte, rein exemplarisch rechteckig ausgebildete Oberflächen 76 der Einprägungen 72 aufgelegt werden und stoffschlüssig, vorzugsweise durch Kleben oder Schweißen, mit diesen Oberflächen 76 verbunden werden. Bei einer gestrichelt in der Figur 4 angedeuteten Variante der Profilschaufel 61 ist auch der erste Endbereich 70 mit Einprägungen 78 versehen, die für einen Eingriff zwischen die Einprägungen 72 ausgebildet sind und neben einer Stabilisierung des ersten Endbereichs 70 auch eine vergrößerte Kontaktfläche der beiden Endbereiche 70, 71 gewährleisten.

Bei der in Figur 6 dargestellten fünften Ausführungsform einer erfindungsgemäßen Profilschaufel 101 ist in den zweiten Endbereich 111 eine Einprägung 112 eingebracht, die erhaben in Richtung des ersten Endbereichs 110 abragt. Exemplarisch ist vorgesehen, dass sich die Einprägung nur über einen Teil der Kantenlänge der Endbereichskante 106 des zweiten Endbereichs 111 erstreckt, so dass der Endbereich nahe der längsten Kanten 103, 104 lediglich eine geringe Krümmung aufweist. Beispielhaft weist die Einprägung 112 längs der Profilachse 108 eine L-förmige Profilierung auf, wobei ein längerer Schenkel 114 der Einprägung 112 der zweiten Endbereichskante 106 zugewandt ist, während ein kürzerer Schenkel 115 der Einprägung 112 der zweiten Endbereichskante 106 abgewandt ist. Der erste Endbereich 110, der randseitig bereichsweise mit einer exemplarisch rechteckig ausgebildeten, nicht näher bezeichneten Ausklinkung versehen ist, liegt flächig auf einer gestrichelt in der Figur 6 eingezeichneten, rein exemplarisch rechteckig ausgebildeten Oberfläche 116 der Einprägung 112 auf und kann stoffschlüssig, vorzugsweise durch Kleben oder Schweißen, mit der Einprägung 112 verbunden werden.

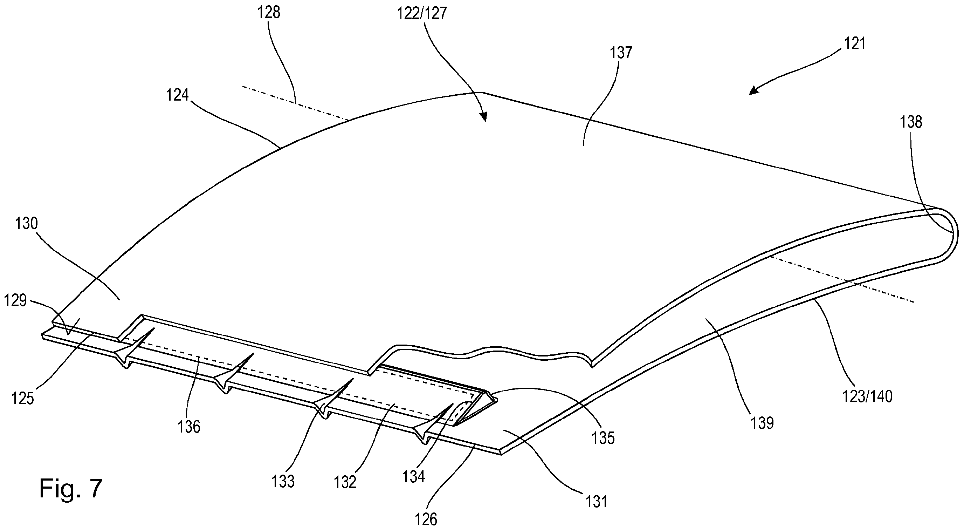

Bei der in Figur 7 dargestellten sechsten Ausführungsform einer erfindungsgemäßen Profilschaufel 121 handelt es sich um eine Variante der Profilschaufel 101, bei der zusätzlich in den zweiten Endbereich 131 längs der Endbereichskante 126, vorzugsweise in gleicher Teilung beabstandete Einprägungen 133 eingebracht sind. Diese Einprägungen 133 sind bezüglich des ersten Endbereichs 130 vertieft in den zweiten Endbereiche 131 eingebracht und erstrecken sich ausgehend von der Endbereichskante 126 in Richtung der Profilnase 138.

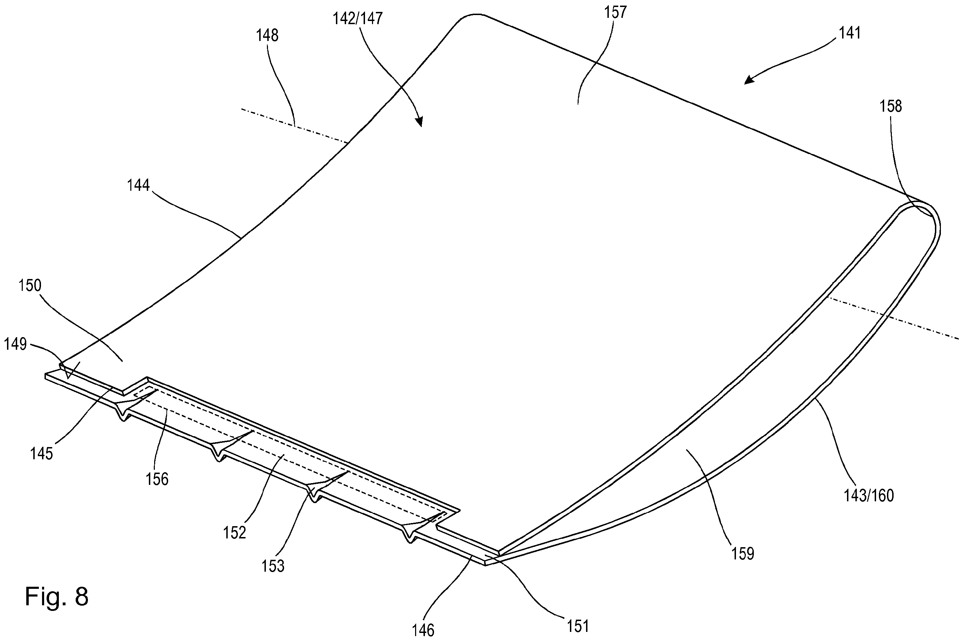

Bei der in Figur 8 dargestellten siebten Ausführungsform einer erfindungsgemäßen Profilschaufel 141 handelt es sich um eine Variante der Profilschaufel 121 gemäß der Figur 7, bei der lediglich die Krümmungen der Profilteile 157, 158 verändert sind. Hierbei weist das obere Profilteil 157 eine konkave Außenoberfläche auf, während das untere Profilteil 158 eine konvexe Außenoberfläche aufweist. Exemplarisch kann vorgesehen werden, die vorstehend beschriebenen Profilschaufeln 21, 41, 61, 101, 121, 141 zur Herstellung eines Ventilatorrads 90 einzusetzen, wie es in der Figur 5 rein exemplarisch mit einer Bestückung mit Profilschaufeln 21 dargestellt ist. Ein derartiges Ventilatorrad 90 wird zur Förderung eines gasförmigen Fluids verwendet und umfasst rein exemplarisch mehrere Schaufeln 21, die in vorgebbarer Winkelteilung in einem ringförmigen Raumvolumen um eine Rotationsachse 92 angeordnet sind. Die Schaufeln 21 sind mit ihren axialen, einander entgegengesetzten Endbereichen jeweils an Trägermitteln 93, 94 festgelegt. Dabei ist ein erstes Trägermittel als scheibenförmige Ronde 93 koaxial zur Rotationsachse 92 ausgebildet und umfasst eine Nabenanordnung 95. Ein zweites Trägermittel ist hingegen als Ring 94 koaxial zur Rotationsachse 92 ausgebildet. Dabei ist vorgesehen, dass die Profilschaufeln 21 jeweils mit der Profilnase 38 radial innenliegend angeordnet sind, während die stoffschlüssig miteinander verbundenen Endbereiche 30, 31 radial außen liegend angeordnet sind. Durch die Krümmungen der beiden Profilteile 37, 39 wird bei einer Rotation des Ventilatorrads 90 um die Rotationsachse 92 mit einer Drehrichtung, die gemäß der Darstellung der Figur 5 im Uhrzeigersinn ausgerichtet ist, eine rückwärtsgerichtete Rotation der Profilschaufeln 21 bewirkt, durch die ein axialer Zustrom von Fluid längs der Rotationsachse 92 durch den Ring 94 in das ringförmigen Raumvolumen und von dort aus in radialer Richtung nach außen erfolgt. Hierbei strömt das Fluid zunächst die Profilnase 38 der Profilschaufeln 21 an, um dann längs der Profilteile 37, 39 in radialer Richtung nach außen abzuströmen. Rein exemplarisch ist vorgesehen, dass die Profilschaufeln 21 zumindest nahezu vollständig entlang von stirnseitigen Profilkanten 40 mit der scheibenförmigen Ronde 93 und dem Ring 94 verschweißt sind. Durch die Gestaltung der Profilschaufeln 21 als Profilkörper 27 wird somit in Zusammenwirkung mit der scheibenförmigen Ronde 93 und dem Ring 94 ein hochfestes und kostengünstiges Ventilatorrad 90 verwirklicht.

## Patentansprüche

1. Profilschaufel für ein Ventilatorrad (90), mit einem aus wenigstens einem gebogenen Blechstreifen (22; 42; 42a; 62; 102; 122; 142) hergestellten Profilkörper (27; 47; 47a; 67; 107; 127; 147), wobei benachbarte Endbereiche (30, 31; 50, 51; 50a, 51a; 70, 71; 110, 111; 130, 131; 150, 151) des wenigstens einen Blechstreifens (22; 42; 42a; 62; 102; 122; 142) stoffschlüssig und/oder formschlüssig miteinander verbunden sind, **dadurch gekennzeichnet, dass** ein zweiter Endbereich (31; 51; 51a; 71; 111; 131; 151) beabstandet zu einer zweiten Endbereichskante (26; 46; 46a; 66; 106; 126; 146) mit wenigstens einer Einprägung (52; 52a; 72; 112; 132; 152) zur Ausbildung einer Anlagefläche (56; 56a; 76; 116; 136; 156) für eine zumindest abschnittsweise Anlage eines ersten Endbereichs (30; 50; 50a; 70; 110; 130; 150) versehen ist.

2. Profilschaufel nach Anspruch 1, **dadurch gekennzeichnet, dass** eine erste Endbereichskante (25; 45; 45a; 65; 105; 125; 145) des ersten Endbereichs (30; 50; 50a; 70; 110; 130; 150) beabstandet zur zweiten Endbereichskante (26; 46; 46a; 66; 106; 126; 146) des zweiten Endbereichs (31; 51; 71; 111; 131; 151) angeordnet ist und dass die erste Endbereichskante (25; 45, 45a; 65; 105; 125; 145) an einer dem ersten Endbereich (30; 50, 50a; 70; 110; 130; 150) zugewandten Oberseite (29; 49; 49a; 69; 109; 129; 149) des zweiten Endbereichs (31; 51; 51a; 71; 111; 131; 151) festgelegt ist.

3. Profilschaufel nach Anspruch 2, **dadurch gekennzeichnet, dass** der Profilkörper (27; 47; 47a; 67; 107; 127; 147) ein den ersten Endbereich (30; 50; 50a; 70; 110; 130; 150) umfassendes erstes, insbesondere plattenförmig ausgebildetes, Profilteil (37; 57; 77; 117; 137; 157) aufweist, das mit einer mantelförmig ausgebildeten, stark gekrümmten Profilnase (38; 58; 78; 118; 138; 158) verbunden ist, die mit einem zweiten, insbesondere plattenförmig ausgebildeten, Profilteil (39; 59; 79; 119; 139; 159) verbunden ist, das am zweiten Endbereich (31; 51; 51a; 71; 111; 131; 151) endet.

4. Profilschaufel nach Anspruch 3, **dadurch gekennzeichnet, dass** die Profilnase (38; 58; 78; 118; 138; 158) eine konvex gekrümmte Außenoberfläche aufweist und/oder dass das erste Profilteil (37; 57; 77; 117; 137) eine konvex gekrümmte Außenoberfläche aufweist und/oder dass das zweite Profilteil (39; 59; 79; 119; 139) eine konkav gekrümmte Außenoberfläche aufweist.

5. Profilschaufel nach Anspruch 1, 2, 3 oder 4, **dadurch gekennzeichnet, dass** die Einprägung (32; 52; 52a; 72; 112; 132; 152) als Sicke ausgebildet ist und beabstandet, insbesondere parallel, zur zweiten Endbereichskante (26; 46; 46a; 66; 106; 126; 146) verläuft.

6. Profilschaufel nach einem der vorhergehenden Ansprüche, **dadurch gekennzeichnet, dass** die Einprägung (32; 52; 52a; 72; 112; 132; 152) an der Oberseite (9; 29; 49; 69; 109; 129; 149) des zweiten Endbereichs (31; 51; 51a; 71; 111; 131; 151) erhaben, insbesondere mit einer L-förmigen Profilierung, ausgebildet ist.

7. Profilschaufel nach einem der Ansprüche 1-5, **dadurch gekennzeichnet, dass** die Einprägung (32; 52; 52a; 72; 112; 132; 152) an der Oberseite (29; 49; 69; 109; 129; 149) des zweiten Endbereichs (31; 51; 51a; 71; 111; 131; 151) vertieft, insbesondere mit einer L-förmigen Profilierung, ausgebildet ist.

8. Profilschaufel nach einem der vorhergehenden Ansprüche, **dadurch gekennzeichnet, dass** der Profilkörper (27; 47; 47a; 67; 107; 127; 147) stirnseitig offen ausgebildet und/oder aus genau einem einstückigen, umgebogenen Blechstreifen (22; 42; 42a; 62; 102; 122; 142) gebildet ist.

9. Profilschaufel nach einem der vorhergehenden Ansprüche, **dadurch gekennzeichnet, dass** die erste Endbereichskante (25; 45; 45a; 65; 105; 125; 145) mit der dem ersten Endbereich (30; 50; 50a; 70; 110; 130; 150) zugewandten Oberseite (29; 49; 49a; 69; 109; 129; 149) des zweiten Endbereichs (31; 51, 51a; 71; 111; 131; 151) verschweißt und/oder verklebt ist.

10. Ventilatorrad zur Förderung eines gasförmigen Fluids, mit einer scheibenförmigen Ronde (93), die koaxial zu einer Rotationsachse (92) ausgebildet ist und eine Nabenanordnung (95) umfasst, sowie mit einem koaxial zur Rotationsachse (92) und beabstandet zur Ronde (93) angeordneten Ring (94), und mit mehreren in vorgebbarer Winkelteilung in einem ringförmigen Raumvolumen um die Rotationsachse (92) angeordneten Profilschaufeln (21; 41; 41a; 61; 101; 121; 141) nach einem der vorhergehenden Ansprüche, die mit axialen, einander entgegengesetzten Stirnflächen an der Ronde (93) und am Ring (94) festgelegt sind.

11. Ventilatorrad nach Anspruch 10, **dadurch gekennzeichnet, dass** die Profilschaufeln (21; 41; 41a; 61; 101; 121; 141) jeweils eine radial innenliegend im ringförmigen Raumvolumen angeordnete Profilnase (38; 58; 78; 118; 138; 158) und radial außenliegend im ringförmigen Raumvolumen angeordnete erste Endbereiche (30; 50; 50a; 70; 110; 130; 150) und zweite Endbereiche (31; 51; 51a; 71; 111; 131; 151) aufweisen.

12. Verfahren zur Herstellung einer Profilschaufel, die insbesondere nach einem der Ansprüche 1 bis 9 ausgeführt ist, mit den Schritten: Bereitstellen eines Blechstreifens (22; 42; 42a; 62; 102; 122; 142) an eine Prägeeinrichtung, Durchführen eines Prägevorgangs zur Einbringung einer Einprägung (32; 52; 52a; 72; 112; 132; 152) in einen zweiten Endbereich (31; 51; 51a; 71; 111; 131; 151) und beabstandet zu einer zweiten Endbereichskante (26; 46; 46a; 66; 106; 126; 146) des Blechstreifens (22; 42; 42a; 62; 102; 122; 142) zur Ausbildung einer Anlagefläche (56; 56a; 76; 116; 136; 156) für eine zumindest abschnittsweise Anlage eines ersten Endbereichs (30; 50; 50a; 70; 110; 130; 150), Bereitstellen des geprägten Blechstreifens (22; 42; 42a; 62; 102; 122; 141) an eine Umformeinrichtung und Deformation des Blechstreifens (22; 42; 42a; 62; 102; 122; 141) zur Ausbildung einer Profilnase (38; 58; 78; 118; 138; 158), eines ersten Profilteils (37; 57; 77; 117; 137; 157) und eines zweiten Profilteils (39; 59; 79; 119; 139; 159), Anlegen einer ersten Endbereichskante (25; 45; 45a; 65; 105; 125; 145) des ersten Endbereichs (30; 50; 50a; 70; 110; 130; 150) an eine dem ersten Endbereich (30; 50; 50a; 70; 110; 130; 150) zugewandte Oberseite (29; 49; 49a; 69; 109; 129; 149) des zweiten Endbereichs (31; 51; 51a; 71; 111; 131; 151) und stoffschlüssiges Verbinden der ersten Endbereichskante (25; 45; 45a; 65; 105; 125; 145) mit der Oberseite (29; 49; 49a; 69; 109; 129; 149) des zweiten Endbereichs (31; 51; 51a; 71; 111; 131; 151).

13. Verfahren nach Anspruch 12, **dadurch gekennzeichnet, dass** mit der Durchführung des Prägevorgangs die Deformation des Blechstreifens (22; 42; 42a; 62; 102; 122; 141) und/oder ein Trennvorgang für den Blechstreifen (22; 42; 42a; 62; 102; 122; 141) aus einer Blechtafel vorgenommen werden.

14. Verfahren nach Anspruch 12, **dadurch gekennzeichnet, dass** die erste Endbereichskante (25; 45; 45a; 65; 105; 125; 145) mit der Oberseite (29; 49; 49a; 69; 109; 129; 149) des zweiten Endbereichs (31; 51; 51a; 71; 111; 131; 151) verschweißt wird und dass dadurch gebildete Profilschaufeln für eine stirnseitige Verschweißung mit einer scheibenförmigen Ronde (93) und mit einem koaxial und beabstandet zur Ronde (93) angeordneten Ring (94) jeweils längs einer umlaufenden Profilaußenkante (40, 60, 80; 120; 140; 160) ausgebildet sind.

## Claims

1. Profiled blade for a fan wheel (90), with a profile body (27; 47; 47a; 67; 107; 127; 147) made from at least one curved metal strip (22; 42; 42a; 62; 102; 122; 142), whereby adjacent end zones (30, 31; 50, 51; 50a, 51a; 70, 71; 110, 111; 130, 131; 150, 151) of the least one metal strip (22; 42; 42a; 62; 102; 122; 142) are connected in an adhesive bonded and/or form-fit manner to each other, **characterised in that** a second end zone (31; 51; 51a; 71; 111; 131; 151) is equipped with at least one embossed area (52; 52a; 72; 112; 132; 152) at a distance from a second end zone edge (26; 46; 46a; 66; 106; 126; 146) for the formation of a contact surface (56; 56a; 76; 116; 136; 156) to enable an at least partial contact with a first end zone (30; 50; 50a; 70; 110; 130; 150).

2. Profiled blade according to Claim 1, **characterised in that** a first end zone edge (25; 45; 45a; 65; 105; 125; 145) of the first end zone (30; 50; 50a; 70; 110; 130; 150) is arranged at a distance from the second end zone edge (26; 46; 46a; 66; 106; 126; 146) of the second end zone (31; 51; 71; 111; 131; 151) and that the first end zone edge (25; 45, 45a; 65; 105; 125; 145) is fixed on an upper side (29; 49; 49a; 69; 109; 129; 149) of the second end zone (31; 51; 51a; 71; 111; 131; 151) facing towards the first end zone (30; 50, 50a; 70; 110; 130; 150).

3. Profiled blade according to Claim 2, **characterised in that** the profile body (27; 47; 47a; 67; 107; 127; 147) has a first, in particular plate-shaped, profiled part (37; 57; 77; 117; 137; 157) enclosing the first end zone (30; 50; 50a; 70; 110; 130; 150), which (part) is connected to a sleeve-shaped, highly curved leading edge (38; 58; 78; 118; 138; 158), which is connected to a second, in particular plate-shaped, profiled part (39; 59; 79; 119; 139; 159), which ends at the second end zone (31; 51; 51a; 71; 111; 131; 151).

4. Profiled blade according to Claim 3, **characterised in that** the leading edge (38; 58; 78; 118; 138; 158) has a convexly curved outer surface and/or that the first profiled part (37; 57; 77; 117; 137) has a convexly curved outer surface and/or that the second profiled part (39; 59; 79; 119; 139) has a concavely curved outer surface.

5. Profiled blade according to Claim 1, 2, 3 or 4, **characterised in that** the embossed area (32; 52; 52a; 72; 112; 132; 152) is designed as corrugation and is located at a distance from, in particular in parallel to, the second end zone edge (26; 46; 46a; 66; 106; 126; 146).

6. Profiled blade according to any one of the preceding claims, **characterised in that** the embossed area (32; 52; 52a; 72; 112; 132; 152) protrudes from the upper side (9; 29; 49; 69; 109; 129; 149) of the second end zone (31; 51; 51a; 71; 111; 131; 151), in particular with an L-shaped profile.

7. Profiled blade according to claims 1 to 5, **characterised in that** the embossed area (32; 52; 52a; 72; 112; 132; 152) is recessed in the upper side (29; 49; 69; 109; 129; 149) of the second end zone (31; 51; 51a; 71; 111; 131; 151), in particular with an L-shaped profile.

8. Profiled blade according to any one of the preceding claims, **characterised in that** the profile body (27; 47; 47a; 67; 107; 127; 147) is designed open on the front side and/or is formed from precisely one one-piece, bent metal strip (22; 42; 42a; 62; 102; 122; 142).

9. Profiled blade according to any one of the preceding claims, **characterised in that** the first end zone edge (25; 45; 45a; 65; 105; 125; 145) is welded and/or glued to the upper side (29; 49; 49a; 69; 109; 129; 149) of the second end zone (31; 51, 51a; 71; 111; 131; 151) facing towards the first end zone (30; 50; 50a; 70; 110; 130; 150).

10. Fan wheel for transporting a gaseous fluid, with a disc-shaped round plate (93), which is designed coaxial to an axis of rotation (92) and comprises a hub arrangement (95), and with a ring (94) arranged coaxially to the axis of rotation (92) and at a distance from the round plate (93), and with several profiled blades (21; 41; 41a; 61; 101; 121; 141) according to any one of the preceding claims arranged in a presettable angular division in a ring-shaped spatial volume around the axis of rotation (92), fixed with axial, opposing faces on the round plate (93) and on the ring (94).

11. Fan wheel according to Claim 10, **characterised in that** the profiled blades (21; 41; 41a; 61; 101; 121; 141) each have a leading edge (38; 58; 78; 118; 138; 158) arranged radially inward in the ring-shaped spatial volume and first end zones (30; 50; 50a; 70; 110; 130; 150) and second end zones (31; 51; 51a; 71; 111; 131; 151) arranged radially outward in the ring-shaped spatial volume.

12. Method for producing a profiled blade which is designed in particular according to any one of Claims 1 to 9, with the following steps: supplying a metal strip (22; 42; 42a; 62; 102; 122; 142) to an embossing device, carrying out an embossing process to emboss an embossed area (32; 52; 52a; 72; 112; 132; 152) into a second end zone (31; 51; 51a; 71; 111; 131; 151) at a distance from a second end zone edge (26; 46; 46a; 66; 106; 126; 146) of the metal strip (22; 42; 42a; 62; 102; 122; 142) for the formation of a contact surface (56; 56a; 76; 116; 136; 156) to enable an at least partial contact with a first end zone (30; 50; 50a; 70; 110; 130; 150), suppling the embossed metal strip (22; 42; 42a; 62; 102; 122; 141) to a metal forming device and deforming the metal strip (22; 42; 42a; 62; 102; 122; 141) to form a leading edge (38; 58; 78; 118; 138; 158), a first profiled part (37; 57; 77; 117; 137; 157) and a second profiled part (39; 59; 79; 119; 139; 159), bringing into contact a first end zone edge (25; 45; 45a; 65; 105; 125; 145) of the first end zone (30; 50; 50a; 70; 110; 130; 150) with an upper side (29; 49; 49a; 69; 109; 129; 149) of the second end zone (31; 51; 51a; 71; 111; 131; 151) facing towards the first end zone (30; 50; 50a; 70; 110; 130; 150) and connecting the first end zone edge (25; 45; 45a; 65; 105; 125; 145) to the upper side (29; 49; 49a; 69; 109; 129; 149) of the second end zone (31; 51; 51a; 71; 111; 131; 151) by adhesive bonding.

13. Method according to Claim 12, **characterised in that** with the implementation of the embossing process, the deformation of the metal strip (22; 42; 42a; 62; 102; 122; 141) and/or a separation process for separating the metal strip (22; 42; 42a; 62; 102; 122; 141) from a metal sheet are performed.

14. Method according to Claim 12, **characterised in that** the first end zone edge (25; 45; 45a; 65; 105; 125; 145) is welded to the upper side (29; 49; 49a; 69; 109; 129; 149) of the second end zone (31; 51; 51a; 71; 111; 131; 151) and that profiled blades formed thereby are each welded on the front side to a disc-shaped round plate (93) and to a ring (94) arranged coaxially to and at a distance from the round plate (93), in each case along a profile outer edge going all the way round (40, 60, 80; 120; 140; 160).

## Revendications

1. Aube profilée pour une roue de ventilateur (90), avec un corps profilé (27 ; 47 ; 47a ; 67 ; 107 ; 127 ; 147) fabriqué à partir d'au moins une bande de tôle (22 ; 42 ; 42a ; 62 ; 102 ; 122 ; 142) cintrée, dans laquelle des zones d'extrémité (30, 31 ; 50, 51 ; 50a, 51a ; 70, 71 ; 110, 111 ; 130, 131 ; 150, 151) adjacentes de l'au moins une bande de tôle (22 ; 42 ; 42a ; 62 ; 102 ; 122 ; 142) sont reliées les unes aux autres par liaison de matière et/ou par complémentarité de forme, **caractérisée en ce qu'**une deuxième zone d'extrémité (31 ; 51 ; 51a ; 71 ; 111 ; 131 ; 151) est pourvue, à distance par rapport à une deuxième arête de zone d'extrémité (26 ; 46 ; 46a ; 66 ; 106 ; 126 ; 146), d'au moins un estampage (52 ; 52a ; 72 ; 112 ; 132 ; 152) pour réaliser une surface d'appui (56 ; 56a ; 76 ; 116 ; 136 ; 156) pour un appui au moins par endroits d'une première zone d'extrémité (30 ; 50 ; 50a ; 70 ; 110 ; 130 ; 150).

2. Aube profilée selon la revendication 1, **caractérisée en ce qu'**une première arête de zone d'extrémité (25 ; 45 ; 45a ; 65 ; 105 ; 125 ; 145) de la première zone d'extrémité (30 ; 50 ; 50a ; 70 ; 110 ; 130 ; 150) est disposée à distance par rapport à la deuxième arête de zone d'extrémité (26 ; 46 ; 46a ; 66 ; 106 ; 126 ; 146) de la deuxième zone d'extrémité (31 ; 51 ; 71 ; 111 ; 131 ; 151), et que la première arête de zone d'extrémité (25 ; 45, 45a ; 65 ; 105 ; 125 ; 145) est fixée au niveau d'un côté supérieur (29 ; 49 ; 49a ; 69 ; 109 ; 129 ; 149), tourné vers la première zone d'extrémité (30 ; 50, 50a ; 70 ; 110 ; 130 ; 150), de la deuxième zone d'extrémité (31 ; 51 ; 51a ; 71 ; 111 ; 131 ; 151).

3. Aube profilée selon la revendication 2, **caractérisée en ce que** le corps profilé (27 ; 47 ; 47a ; 67 ; 107 ; 127 ; 147) présente une première partie profilée (37 ; 57 ; 77 ; 117 ; 137 ; 157), réalisée en particulier en forme de plaque, comprenant la première zone d'extrémité (30 ; 50 ; 50a ; 70 ; 110 ; 130 ; 150), qui est reliée à un ergot profilé (38 ; 58 ; 78 ; 118 ; 138 ; 158) fortement incurvé, réalisé en forme d'enveloppe, qui est relié à une deuxième partie profilée (39 ; 59 ; 79 ; 119 ; 139 ; 159) réalisée en particulier en forme de plaque, qui se termine au niveau de la deuxième zone d'extrémité (31 ; 51 ; 51a ; 71 ; 111 ; 131 ; 151).

4. Aube profilée selon la revendication 3, **caractérisée en ce que** l'ergot profilé (38 ; 58 ; 78 ; 118 ; 138 ; 158) présente une surface extérieure incurvée de manière convexe, et/ou que la première partie profilée (37 ; 57 ; 77 ; 117 ; 137) présente une surface extérieure incurvée de manière convexe, et/ou que la deuxième partie profilée (39 ; 59 ; 79 ; 119 ; 139) présente une surface extérieure incurvée de manière concave.

5. Aube profilée selon la revendication 1, 2, 3 ou 4, **caractérisée en ce que** l'estampage (35 ; 52 ; 52a ; 72 ; 112 ; 132 ; 152) est réalisé en tant qu'une moulure et s'étend à distance, en particulier de manière parallèle, par rapport à la deuxième arête de zone d'extrémité (26 ; 46 ; 46a ; 66 ; 106 ; 126 ; 146).

6. Aube profilée selon l'une quelconque des revendications précédentes, **caractérisée en ce que** l'estampage (32 ; 52 ; 52a ; 72 ; 112 ; 132 ; 152) est réalisé en relief au niveau du côté supérieur (9 ; 29 ; 49 ; 69 ; 109 ; 129 ; 149) de la deuxième zone d'extrémité (31 ; 51 ; 51a ; 71 ; 111 ; 131 ; 151), en particulier avec un profilage en forme de L.

7. Aube profilée selon l'une quelconque des revendications 1 à 5, **caractérisée en ce que** l'estampage (32 ; 52 ; 52a ; 72 ; 112 ; 132 ; 152) est réalisé de manière renfoncée au niveau du côté supérieur (29 ; 49 ; 69 ; 109 ; 129 ; 149) de la deuxième zone d'extrémité (31 ; 51 ; 51a ; 71 ; 111 ; 131 ; 151), en particulier avec un profilage en forme de L.

8. Aube profilée selon l'une quelconque des revendications précédentes, **caractérisée en ce que** le corps profilé (27 ; 47 ; 47a ; 67 ; 107 ; 127 ; 147) est relié de manière ouverte côté frontal et/ou est formé à partir de précisément une bande de tôle (22 ; 42 ; 42a ; 62 ; 102 ; 122 ; 142) repliée d'un seul tenant.

9. Aube profilée selon l'une quelconque des revendications précédentes, **caractérisée en ce que** la première arête de zone d'extrémité (25 ; 45 ; 45a ; 65 ; 105 ; 125 ; 145) est soudée et/ou collée au côté supérieur (29 ; 49 ; 49a ; 69 ; 109 ; 129 ; 149), tourné vers la première zone d'extrémité (30 ; 50 ; 50a ; 70 ; 110 ; 130 ; 150), de la deuxième zone d'extrémité (31 ; 51 ; 51a ; 71 ; 111 ; 131 ; 151).

10. Roue de ventilateur pour refouler un fluide sous forme gazeuse, avec un rond (93) en forme de disque, qui est réalisé de manière coaxiale par rapport à un axe de rotation (92) et comprend un ensemble formant moyeu (95), ainsi qu'avec une bague (94) disposée de manière coaxiale par rapport à l'axe de rotation (92) et à distance par rapport au rond (93), et avec plusieurs aubes profilées (21 ; 41 ; 41a ; 61 ; 101 ; 121 ; 141) selon l'une quelconque des revendications précédentes, disposées avec une répartition angulaire pouvant être spécifiée dans un volume spatial de forme annulaire autour de l'axe de rotation (92), qui sont fixées au niveau du rond (93) et au niveau de la bague (94) avec des surfaces frontales axiales opposées les unes aux autres.

11. Roue de ventilateur selon la revendication 10, **caractérisée en ce que** les aubes profilées (21 ; 41 ; 41a ; 61 ; 101 ; 121 ; 141) présentent respectivement un ergot profilé (38 ; 58; 78 ; 118 ; 138 ; 158) disposé radialement à l'intérieur dans le volume spatial en forme de bague et des premières zones d'extrémité (30 ; 50 ; 50a ; 70 ; 110 ; 130 ; 150) disposées radialement à l'extérieur dans le volume d'espace de forme annulaire et des deuxièmes zones d'extrémité (31 ; 51 ; 51a ; 71 ; 111 ; 131 ; 151).

12. Procédé de fabrication d'une aube profilée, qui est réalisée en particulier selon l'une quelconque des revendications 1 à 9, avec les étapes : de fourniture d'une bande de tôle (22 ; 42 ; 42a ; 62 ; 102 ; 122 ; 142) au niveau d'un dispositif d'estampage, de mise en œuvre d'une opération d'estampage pour pratiquer un estampage (32 ; 52 ; 52a ; 72 ; 112 ; 132 ; 152) dans une deuxième zone d'extrémité (31 ; 51 ; 51a ; 71 ; 111 ; 131 ; 151) et à distance par rapport à une deuxième arête de zone d'extrémité (26 ; 46 ; 46a ; 66 ; 106 ; 126 ; 146) de la bande de tôle (22 ; 42 ; 42a ; 62 ; 102 ; 122 ; 142) pour réaliser une surface d'appui (56 ; 56a ; 76 ; 116 ; 136 ; 156) pour un appui au moins par endroits d'une première zone d'extrémité (30 ; 50 ; 50a ; 70 ; 110 ; 130 ; 150), de fourniture de la bande de tôle (22 ; 42 ; 42a ; 62 ; 102 ; 122 ; 141) estampée au niveau d'un système de mise en forme et de déformation de la bande de tôle (22 ; 42 ; 42a ; 62 ; 102 ; 122 ; 141) pour réaliser un ergot profilé (38 ; 58 ; 78 ; 118 ; 138 ; 158) d'une première partie profilée (37 ; 57 ; 77 ; 117 ; 137 ; 157) et d'une deuxième partie profilée (39 ; 59 ; 79 ; 119 ; 139 ; 159) ; de placement d'une première arête de zone d'extrémité (25 ; 45 ; 45a ; 65 ; 105 ; 125 ; 145) de la première zone d'extrémité (30 ; 50 ; 50a ; 70 ; 110 ; 130 ; 150) au niveau d'un côté supérieur (29 ; 49 ; 49a ; 69 ; 109 ; 129 ; 149), tourné vers la première zone d'extrémité (30 ; 50 ; 50a ; 70 ; 110 ; 130 ; 150), de la deuxième zone d'extrémité (31 ; 51 ; 51a ; 71 ; 111 ; 131 ; 151) et de liaison par liaison de matière de la première arête de zone d'extrémité (25 ; 45 ; 45a ; 65 ; 105 ; 125 ; 145) au côté supérieur (29 ; 49 ; 49a ; 69 ; 109 ; 129 ; 149) de la deuxième zone d'extrémité (31 ; 51 ; 51a; 71 ; 111 ; 131 ; 151).

13. Procédé selon la revendication 12, **caractérisé en ce qu'**avec la mise en œuvre de l'opération d'estampage, la déformation de la bande de tôle (22 ; 42 ; 42a ; 62 ; 102 ; 122 ; 141) et/ou une opération de séparation pour la bande de tôle (22 ; 42 ; 42a ; 62 ; 102 ; 122 ; 141) sont réalisées à partir d'une feuille de tôle.

14. Procédé selon la revendication 12, **caractérisé en ce que** la première arête de zone d'extrémité (25 ; 45 ; 45a ; 65 ; 105 ; 125 ; 145) est soudée au côté supérieur (29; 49; 49a ; 69; 109 ; 129 ; 149) de la deuxième zone d'extrémité (31 ; 51 ; 51a ; 71 ; 111 ; 131 ; 151), et que des aubes profilées ainsi formées sont réalisées pour un soudage côté frontal à un rond (93) en forme de disque et à une bague (94) disposée de manière coaxiale et à distance par rapport au rond (93) respectivement le long d'une arête extérieure profilée (40, 60, 80 ; 120 ; 140 ; 160) périphérique.
